# EUROPEAN PATENT APPLICATION

(11) **EP 1 063 637 A1**
(43) Date of publication of application: **27.12.2000**
(21) Application number: 00113016.0
(22) Date of filing: 21.06.2000
(51) Int. Cl.: G10L 15/26

(54) **Voice-actuated control apparatus and method of control using the same**

(30) Priority: 21.06.1999 JP 17452699
(71) Applicant: MATSUSHITA ELECTRIC INDUSTRIAL CO., LTD., Kadoma-shi, Osaka 571-8501 (JP)
(72) Inventor: Kurokawa, Hisashi, Yokohama-shi, Kanagawa 240-0042 (JP)
(74) Representative: Kügele, Bernhard

(57) **Abstract**

A speech for controlling a device is input vocally, the speech is recognized, and then a command for controlling the device is produced. This voice actuated control method includes the following steps: A step of inputting a speech vocally for controlling the device, a step of determining whether or not the speech input agrees with an pre-recorded speech stored in a memory, and a step of producing a command for controlling the device when the determination indicates an agreement. The pre-recorded speech stored in the memory is treated as a trigger voice so that a process for starting an input of an pre-recorded speech such as a button operation or inputting a trigger voice can be eliminated. As a result, the command can be quickly issued to the target device.

## Description

### Field of the Invention

The present invention relates to a voice actuated control apparatus for controlling devices through speech recognition and a method of controlling the devices through the speech recognition. More particularly, the present invention relates to the voice-actuated controlling apparatus for controlling the devices within a short time and the method of the same.

### Background of the Invention

Remote control units are used, in general, for controlling the operation of electric home appliances such as television receivers and air-conditioners. Many of these remote-control-units work wirelessly by employing an infrared layer or ultrasonic wave.

However, in the case of controlling the operation of a car-air-conditioner, car-audio-equipment, or car-navigation-system, it is undesirable for a driver to operate switches or a remote control unit of those devices, because the manual control over those devices may adversely affect driving of the car. In order to overcome this problem, voice-actuated-control apparatus have been proposed for controlling those devices through a command issued from this control apparatus recognizing a speech by a speaker. In this control apparatus, a speech recognition technique is employed.

One of conventional speech recognition techniques employed in such a voice-actuated-control apparatus is disclosed in the Japanese Patent Examined Publication No. H03-76474. This technique requires a trigger voice preprogrammed and stored in a memory before the speech recognition is started. The stored trigger voice is compared with a speech input to determine an agreement of a speaker with the stored trigger voice. When the agreement is determined, the speaker is verified, then the speech recognition apparatus starts receiving speech input by the speaker for controlling devices. Next, the speech input is determined whether or not to agree with the pre-recorded speech command, and when the speech input agrees, a command corresponding to the speech is issued to a device to be operated.

However, this conventional speech recognition technique requires the trigger voice preprogrammed and stored for verifying a speaker before a practical speech is input. Thus it takes time before operating the device because two inputs, i.e. the trigger voice and the practical speech for controlling the device, are required.

### Summary of the Invention

The present invention addresses the problem discussed above and aims to provide a voice actuated control apparatus requiring a single speech input for operating devices, and a method of the same.

Another object of the present invention is to provide a voice actuated control apparatus where a user can adjust a pattern and length of a speech to be enrolled.

Further another object of the present invention is to provide a voice actuated control apparatus where a user can set a command arbitrarily corresponding to a speech to be enrolled.

Still further object of the present invention is to provide a voice actuated control apparatus where a user can set a command responsive to an operational mode when devices to be controlled have a plurality of operational modes.

The method of controlling the devices comprises the following steps:
(a) inputting a speech vocally for controlling a device;
(b) determining whether or not the speech input agrees with an pre-recorded speech;
(c) generating a command for controlling a device corresponding to the speech after verifying a speaker as well as recognizing the speech simultaneously when the speech input agrees with the pre-recorded speech; and
(d) operating the device with the command.

The control unit of the present invention comprises the following elements:
a memory for storing a speech enrolled for controlling a device;
a speech inputting unit for inputting any speech vocally;
a voice recognition unit for determining whether or not a speech input from the speech-inputting-unit agrees with the speech stored in the memory; and
a command generator for generating a command for operating a device when the speech recognition unit determines an agreement.

### Brief Description of the Drawings

Fig. 1 is a block diagram illustrating a structure of a voice actuated control apparatus in accordance with a first exemplary embodiment of the present invention.
Fig. 2 is a flowchart illustrating a process of voice-actuated control method in accordance with the first exemplary embodiment of the present invention.
Fig. 3 is a block diagram illustrating a structure of a voice actuated control apparatus in accordance with a second exemplary embodiment of the present invention.
Fig. 4 is a block diagram illustrating a structure of a voice actuated control apparatus in accordance with a third exemplary embodiment of the present invention.
Fig. 5 is a block diagram illustrating a structure of a voice actuated control apparatus in accordance with a fourth exemplary embodiment of the present invention.
Fig. 6 is a block diagram illustrating a structure of a voice actuated control apparatus in accordance with a fifth exemplary embodiment of the present invention.

### Description of the Preferred Embodiments

Exemplary embodiments of the present invention are demonstrated with reference to the accompanied drawings.

### (Exemplary Embodiment 1)

A voice-actuated control apparatus in accordance with the first exemplary embodiment limits a number of speeches to be enrolled, and the enrolled speeches per se are treated as trigger voices, so that a speaker can be verified before a speech is input and speech-recognition are simultaneously conducted. As a result, devices can be operated within a shorter time.

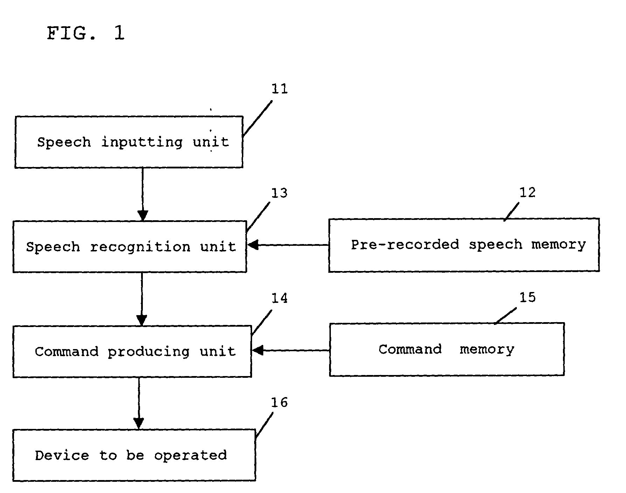

Fig. 1 is a block diagram illustrating a structure of a voice actuated control apparatus in accordance with the first exemplary embodiment of the present invention.

Speech-inputting unit 11 comprises a microphone, an A/D converter and the like. The microphone converts a voice signal into an electrical signal, then the A/ D converter converts the electrical signal into a digital signal. Memory 12 for storing a speech enrolled comprises ROM or RAM, in which a small number of speeches are pre-recorded in text formats or voice patterns. These pre-recorded speeches are referred to as an "pre-recorded speech" hereinafter. Speech recognition unit 13 determines whether or not a digital signal from the speech-inputting-unit 11 agrees with any one of pre-recorded speeches stored in the memory 12. Command producing unit 14 produces a command by referring to command memory 15 responsive to the determination by speech recognition unit 13, and outputs the command to device 16. Devices 16 are to be operated by voice-actuated control apparatus, and devices 16 include car-mounted devices such as a car-air-conditioner, car-audio equipment, car-navigation system and the like.

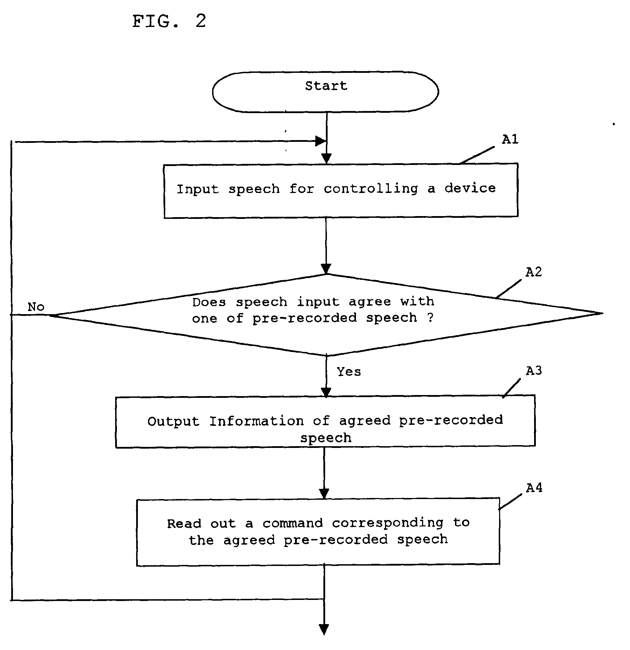

An operation of the voice-actuated control apparatus in accordance with the first embodiment of the present invention is demonstrated with reference to the flowchart in Fig. 2. First, on step A1, one of the pre-recorded speeches stored in memory 12 is input vocally through speech inputting unit 11. The reason, why one of the pre-recorded speeches is input, is to use this input speech as a trigger voice to verify a speaker and, at the same time, this input speech is used for controlling a device. For this reason, a number of the speeches to be input to speech inputting unit 11 are preferably as few as one or a few speeches out of the pre-recorded speeches because of easy recognition.

Speech-inputting unit 11 converts the speech input into a digital signal, then supplies the signal to speech recognition unit 13. On step A2, speech recognition unit 13 compares the speech input with the pre-recorded speeches stored in memory 12, and determines whether or not the speech agrees with one of the pre-recorded speeches. When an agreement is determined, both of the speaker verification and speech recognition are completed, and the process moves on to step A3. However, when an agreement is not determined, neither of the speaker verification nor the voice recognition is not conducted, and the process returns to step A1, where a speech is input again.

On step A3, voice recognition unit 13 outputs the agreed pre-recorded speech to command producing unit 14. On step A4, when receiving the agreed pre-recorded speech, command producing unit 14 reads out a command corresponding to this pre-recorded speech from command memory 15, and supplies the command to device 16. Device 16 then operates as instructed by the command. After completing step A4, the process returns to step A1 for being ready to receive the next speech input.

The speech input is recognized at speech recognition unit 13 in one of the following two ways. One is to analyze a pattern of speech input through speech inputting unit 11, then recognize the pattern as a speech before converting it to text data, and finally compare the text data with a text data of the pre-recorded speech stored in memory 12. In this case, the pre-recorded speeches are stored in the form of text data. Another is to recognize the speech input through unit 11 as pattern data, then compare the pattern data with a voice pattern of the pre-recorded speech stored in memory 12. In this case, the pre-recorded speeches are stored in the form of voice patterns.

The voice actuated control apparatus of the present invention can eliminate an input of a trigger voice which has verified a speaker before the speech is recognized in a conventional apparatus. Since a number of the pre-recorded speeches to be used for the speech recognition is limited to a small number, the speech recognition takes a shorter time and thus devices to be controlled can start operating more quickly. Further, this structure prevents a recognition rate from being lowered. When being applied to car-mounted devices such as a car navigation system, the control apparatus prevents a driver from paying attention to operating such devices, and thus increases safety in driving.

### (Exemplary Embodiment 2)

In this second embodiment, a speech setting unit for setting speeches to be enrolled is added to the structure used in the first embodiment, so that a user can adjust arbitrarily a pattern or a length of an pre-recorded speech.

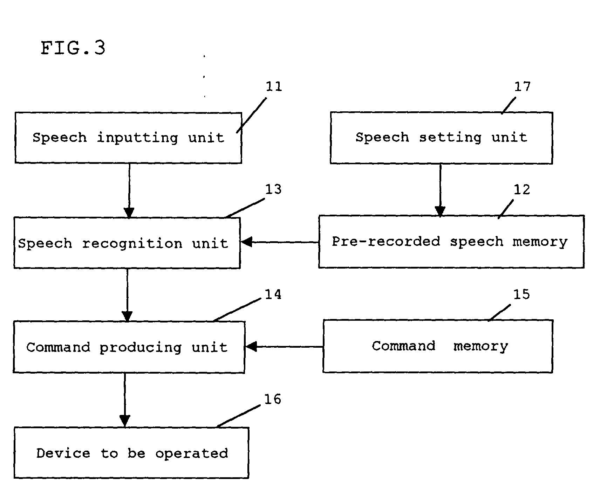

Fig. 3 is a block diagram illustrating a structure of a voice actuated control apparatus in accordance with the second exemplary embodiment of the present invention. In Fig. 2, the same elements used in Fig. 1 are marked with the same reference numbers and the descriptions are thus omitted here.

Speech setting unit 17 is added to the voice-actuated control apparatus used in the first embodiment shown in Fig. 1, so that the user can set arbitrarily speeches to be enrolled for speech recognition purpose and store them in memory 12.

A speech input through speech inputting unit 11 is compared with an pre-recorded speech at speech recognition unit 13, and command generator 14 supplies a command to device 16 following the result of the comparison. This process is the same as that discussed in the first embodiment. The detailed description is thus omitted here.

Speech setting unit 17 is used for inputting a speech to be enrolled to memory 12, and the following four methods, for instance, are available to carry out inputting the speech.
(1) Selecting a word for pre-recorded speech by switches provided corresponding to the speeches;
(2) Selecting displayed word for pre-recorded speech to be enrolled with an input unit such as a remote control unit;
(3) Inputting text data of a word for pre-recorded speech to be enrolled with a keyboard; or
(4) Inputting a speech vocally by a user through speech-inputting unit 11.

As such, the user can arbitrarily set a speech and enroll it to memory 12, thereby adjusting a content, pattern or length of the pre-recorded speech depending on the user's taste. When a recognition rate lowers, another word is input to replace the previous one so that the recognition rate can increase.

### (Exemplary Embodiment 3)

A command setting unit is added to the structure used in the first embodiment, so that a user can arbitrarily set a command corresponding to an pre-recorded speech.

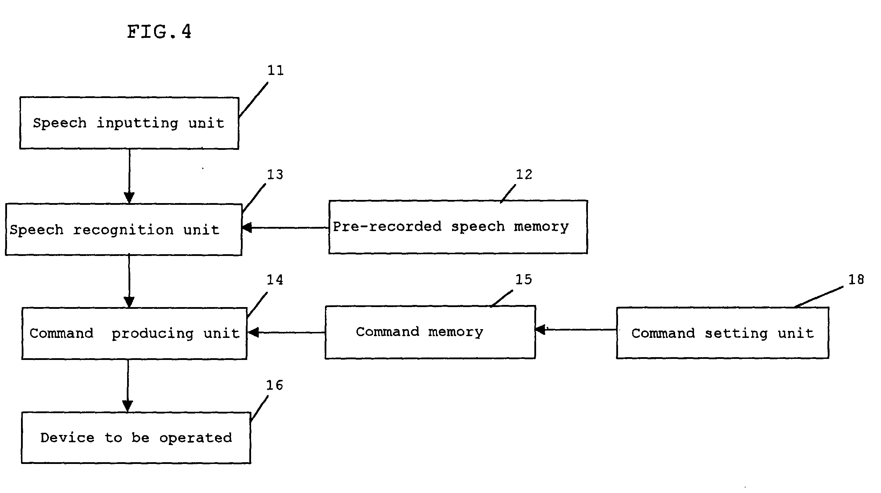

Fig. 4 is a block diagram illustrating a structure of a voice actuated control apparatus in accordance with the third exemplary embodiment of the present invention. In Fig. 4, the same elements used in Fig. 1 are marked with the same reference numbers and the descriptions are thus omitted here.

Command setting unit 18 is added to the voice-actuated control apparatus used in the first embodiment shown in Fig. 1, so that the user can set arbitrarily a command to be supplied to devices 16.

A speech input through speech inputting unit 11 is compared with an pre-recorded speech at speech recognition unit 13, and command producing unit 14 supplies a command to device 16 following the result of the comparison. This process is the same as that discussed in the first embodiment. The detailed description is thus omitted here.

There are following four methods, as same as the case of setting a speech to be enrolled, for setting a command by command-setting unit 18:
(1) Selecting a command by switches provided corresponding to the commands;
(2) Selecting displayed commands;
(3) Inputting text data of a command to be enrolled with a keyboard; or
(4) Inputting a command vocally by a user through speech-inputting unit 11.

A command selected or input for one pre-recorded speech corresponded thereto is stored in command memory 15. Then a command corresponding to the pre-recorded speech information supplied from speech recognition unit 13 is extracted from memory 15 and supplied to devices 16.

At setting a command, if a plurality of pre-recorded speeches are available, a table should be made for mating the pre-recorded speech with the commands and stored in command memory 15.

As such, in the third embodiment, a user can arbitrarily set a command corresponding to an pre-recorded speech using command setting unit 18 and command memory 15. Therefore, when the user wants to change an operation of device 16, or when device 16 is replaced with another one, the user can change a content of the command keeping the pre-recorded speech as it is. In order to raise a recognition rate, it is desirable not to change the pre-recorded speeches stored in memory 12. Therefore, it is preferable to use the speech already enrolled as they are for dealing with new commands.

### (Exemplary embodiment 4)

In this fourth embodiment, a speech enrolling in the second embodiment can be conducted responsive to an operational mode of a device.

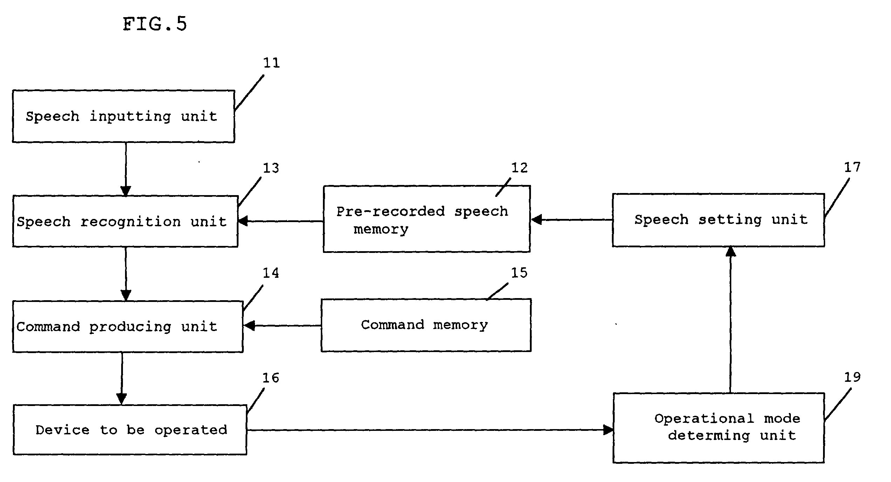

Fig. 5 is a block diagram illustrating a structure of a voice actuated control apparatus in accordance with the fourth exemplary embodiment of the present invention. In Fig. 5, the same elements used in Fig. 3 are marked with the same reference numbers and the descriptions are thus omitted here.

In this embodiment, operational-mode-determining-unit 19 is added to the voice-actuated control apparatus shown in Fig. 3, so that an operational mode indicated by device 16 is determined. Then a speech to be enrolled is set responsive to the determined operational mode. For instance, when device 16 is an air-conditioner, cooling and heating are available as the operational modes. An air outlet and a ventilation direction are different depending on each operational mode. This fourth embodiment can be applied to such a case. For instance, when "air outlet" is one of pre-recorded speeches, the voice-actuated control apparatus controls the air outlet with this one pre-recorded speech "air outlet" to face upward in the cooling mode and face downward in the heating mode.

A speech input through speech inputting unit 11 is compared with an pre-recorded speech at speech recognition unit 13, and command producing unit 14 supplies a command to device 16 following the result of the comparison. This process is the same as that discussed in the first embodiment. The detailed description is thus omitted here.

Operational mode determining unit 19 determines an operational mode of device 16, and informs it to speech setting unit 17. Speech setting unit 17 repeatedly sets a speech corresponding to each operational mode in the same way as shown in Fig. 3, and makes a table for mating the operational modes with the pre-recorded speeches in pre-recorded speech memory 12.

When device 16 has a plurality of operational modes, a user can set a speech responsive to each operational mode. Therefore, device 16 can be differently controlled with the same pre-recorded speech at each operational mode. This structure allows speech recognition unit 13 to reduce a number of pre-recorded speeches to be recognized, thereby shortening a time necessary for the voice recognition.

### (Exemplary embodiment 5)

In this fifth embodiment, a command can be set responsive to an operational mode of a device in the structure used in the third embodiment.

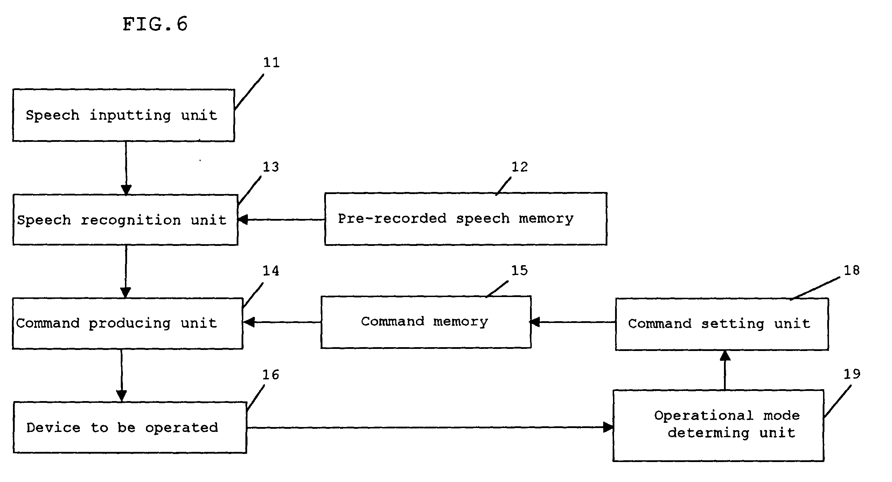

Fig. 6 is a block diagram illustrating a structure of a voice actuated control apparatus in accordance with the fifth exemplary embodiment of the present invention. In Fig. 6, the same elements used in Fig. 4 are marked with the same reference numbers and the descriptions are thus omitted here.

In this embodiment, operational-mode-determining-unit 19 is added to the voice-actuated control apparatus shown in Fig. 4, so that an operational mode indicated by device 16 is determined. Then an pre-recorded speech is set responsive to the determined operational mode.

A speech input through speech inputting unit 11 is compared with an pre-recorded speech at speech recognition unit 13, and command producing unit 14 supplies a command to device 16 following the result of the comparison. This process is the same as that discussed in the first embodiment. The detailed description is thus omitted here.

Operational mode determining unit 19 determines an operational mode of device 16, and informs it to command-setting-unit 18. Command setting unit 18 repeatedly sets a command corresponding to each operational mode in the same way as shown in Fig. 4, and makes a table for mating the operational modes with the commands in command memory 15.

When device 16 has a plurality of operational modes, a user can set a command responsive to each operational mode. Therefore, device 16 can be differently controlled with the same pre-recorded speech at each operational mode. This structure allows voice recognition unit 13 to reduce a number of pre-recorded speeches to be recognized, and supply a plurality of commands to devices 16.

## Claims

1. A voice-actuated control apparatus for controlling a device comprising:
an pre-recorded speech memory (12) for storing the pre-recorded speech which controls a device;
a speech inputting unit (11) for inputting a speech vocally;
a speech recognition unit (13) for determining whether or not the speech input agrees with the pre-recorded speech stored in said memory; and
a command generator (14) for supplying a command to the device (16) when said speech recognition unit determines that the speech input agrees with the pre-recorded speech.

2. The voice actuated control apparatus as defined in Claim 1 further comprising:
a speech setting unit (17) for setting the pre-recorded speech in said memory (12) so that a user can set the pre-recorded speech arbitrarily.

3. The voice actuated control apparatus as defined in Claim 1 further comprising:
a command memory (15) for storing the command; and
a command setting unit (18) for setting the command in said command memory so that a user can set arbitrarily the command for controlling the device.

4. The voice actuated control apparatus as defined in Claim 1 further comprising:
a mode determiner (19) for determining an operational mode of the device (16);
a speech setting unit (17) for setting the pre-recorded speech responsive to the operational mode determined by said mode determiner into said memory so that a user can set the pre-recorded speech arbitrarily for controlling the device.

5. The voice actuated control apparatus as defined in Claim 1 further comprising:
a mode determiner (19) for determining an operational mode of the device;
a command memory (15) for storing the command;
a command setting unit (18) for setting the command responsive to the operational mode determined by said mode determiner into said memory so that a user can set the pre-recorded speech arbitrarily responsive to the operational mode of the devices having a plurality of the operational modes.
